# EUROPEAN PATENT APPLICATION

(11) **EP 3 495 155 A1**
(43) Date of publication of application: **12.06.2019**
(21) Application number: 17206072.5
(22) Date of filing: 08.12.2017
(51) Int. Cl.: B41M 5/24, B41M 5/26, B23K 26/00, B29C 65/16, B23K 26/18, B23K 26/20, B23K 26/32, B23K 26/40, B65B 51/00, C09B 23/01

(54) **NEAR INFRARED (NIR) LASER PROCESSING OF RESIN BASED ARTICLES**

(71) Applicant: AGFA NV, 2640 Mortsel (BE); Agfa-Gevaert, 2640 Mortsel (BE)
(72) Inventor: LAZREG, Faima, 2640 Mortsel (BE); LOCCUFIER, Johan, 2640 Mortsel (BE); VENNEMAN, Jan, 2640 Mortsel (BE); DESMET, Tim, 2640 Mortsel (BE)
(74) Representative: Viaene, Kris

(57) **Abstract**

A method of near infrared (NIR) laser processing a resin based article comprising the steps of applying a composition comprising a specific optothermal converting agent on a surface of the article, and exposing at least part of the applied optothermal converting agent with a NIR laser. The specific optothermal converting has an improved stability towards the environment and therefore renders the laser processing method more reliable.

## Description

### Technical field of the Invention

The present invention relates to Near Infrared (NIR) laser processing of resin based articles.

### Background art for the invention

High resolution processing or converting of resin based articles is a significant challenge, especially for small size or thin resin based articles.

Mechanical processing, such as cutting, drilling or perforating often causes unwanted damage to the cutting or drilling edges. In the case of small size or very thin resin based articles mechanical processing is often even impossible due to the physical properties of the resin used, which can be sensitive to creep or other irreversible deformations during processing, unacceptably compromising the end result.

Laser processing is an alternative contactless method having several advantages compared to mechanical processing.

However, as many resins are as such non responsive to laser radiation or only responsive to high power long wavelength lasers such as CO₂ lasers, controlling the impact of the laser light on the polymer based article is very difficult resulting in similar problems as mechanical processing. By using these type of lasers, selective welding of polymer based parts is for example impossible.

Near Infrared (NIR) lasers have the advantage of much better controllable laser power and a higher resolution. However, hardly any polymer as such is responsive to NIR laser light.

To render a resin based article responsive to NIR radiation, a coating may be provided on the article to increase their absorption in the NIR region, as disclosed in US2012244412.

Typically, only a small part of the surface of the resin based article has to be laser processed, for example those parts of the surface where perforations have to be incorporated, or those parts of the surface, which have to be connected to each other by laser welding. Designing a resin based article, which entire surface is NIR laser responsive, is therefore often not an economical solution.

WO2008/102140 discloses a method wherein energy-absorbing material is applied at selected locations of a polymer film using printing techniques and wherein laser cutting or perforation is then carried out at those selected locations.

WO2008/102140 disclose the use of NIR absorbing cyanine dye as energy-absorbing material. An advantage of such NIR absorbing cyanine dyes is their narrow absorption peak in the NIR region, resulting in a low absorption in the visible region, i.e. a low background colour.

A disadvantage of typical NIR absorbing cyanine dyes is often their limited stability towards for example heat, moisture, UV radiation, or oxygen. This may result in a lower sensitivity towards laser processing and/or an increased background colour upon storage of the laser processable articles.

Furthermore, the coating compositions or inks, which are used to apply the NIR absorbing dye, have only a very limited shelf-life stability, due to the degradation of these components. This variation is not acceptable in an industrial environment.

There is thus a need for laser processable resin based articles containing NIR absorbing compounds having a low absorption in the visible region and a narrow absorption peak in the IR region and having an improved stability towards the environment.

### Summary of the invention

It is an object of the present invention to provide a method of NIR laser processing resin based articles having an improved stability towards heat, radiation, moisture or oxygen.

This object is realised with the method as defined in claim 1.

It was found that by using specific cyanine compounds as optothermal converting agent, more stable laser processable resin based articles could be obtained.

Further objects of the invention will become apparent from the description hereinafter.

### Detailed description of the invention

### Definitions

Unless otherwise specified the term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethyl-propyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, -CN and -NO₂.

### A method of near infrared (NIR) laser processing a resin based article

The method of NIR processing a resin based article comprises the steps of:
- applying a composition comprising an optothermal converting agent as described below on a surface of the article, and
- exposing at least part of the applied optothermal converting agent with a NIR laser.

Laser processing of a resin based article as used herein means any laser induced process resulting in a physical or chemical change in the resin of the resin based article.

Examples of laser processing are laser welding, laser hybrid welding, laser drilling, laser perforation, laser cutting, laser riveting, laser cladding, laser alloying, laser engraving, laser ablation, laser cleaning, laser induced surface modification, laser sintering. Laser processing is preferably laser welding, laser perforation and laser cutting, more preferably laser perforation.

Near infrad red (NIR) radiation as used herein means infrared radiation having a wavelength between 780 and 2000 nm.

According to one embodiment, the optothermal converting agent is applied on an entire surface of the resin based article. In that case, the optothermal converting agent may be applied on the resin based article by any conventional coating technique, such as dip coating, knife coating, extrusion coating, spin coating, spray coating, slide hopper coating and curtain coating.

In a preferred embodiment however, the method of laser processing resin based articles comprises the step of: (a) imagewise applying an optohermal converting agent on a surface of the resin based article, and (b) exposing at least part of the applied optothermal converting agent to a NIR laser.

The optothermal converting agent may be imagewise applied on a surface of the resin based article by any printing method such as intaglio printing, screen printing, flexographic printing, offset printing, inkjet printing, tampon printing, valve jet printing, gravure offset printing, etc.

In a preferred embodiment, inkjet printing is used.

Optionally, after the application of the optothermal converting agent on a surface of a resin based article, a fixation step may be applied. Such a fixation step may include a heating step, a UV curing step, or a combination thereof.

The heating step is preferably carried out at a temperature between 40°C and 200°C, more preferably between 50°C and 150°C. The heating step may also be carried out at temperatures below 100°C.

The fixation step may also be realized by drying, for example by directing an air flow over the applied optothermal converting agent. Such drying may be carried out at ambient temperatures, for example below 40°C, more preferably below 30°C.

The pattern obtained by imagewise application of the optothermal converting agent may include continuous lines, series of spots, or a combination thereof.

The NIR laser has an emission wavelength between 780 and 2000 nm, preferably between 930 and 1150 nm. A particularly preferred NIR laser is a NdYAG laser emitting around 1064 nm.

### Optothermal converting agent

An optothermal converting agent as used herein means a compound or particle capable of absorbing radiation, preferably in the area of 780 to 2000 nm, and converting it into heat.

The optothermal converting agent includes a NIR absorbing compound having a chemical structure according to Formula I, 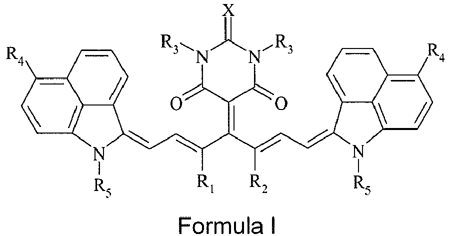 wherein
X is O or S,
R₁ and R₂ represent the necessary atoms to form a substituted or unsubstituted 5 or 6 membered ring,
R₃ and R₅ are independently selected from the group consisting of an unsubstituted alkyl group, an unsubstituted alkenyl group, an unsubstituted alkynyl group, an unsubstituted aralkyl group, an unsubstituted alkaryl group and a substituted or unsubstituted (hetero)aryl group,
R₄ is selected from the group consisting of a hydrogen, an unsubstituted alkyl group, an unsubstituted alkenyl group, an unsubstituted alkynyl group, an unsubstituted aralkyl group, an unsubstituted alkaryl group, a substituted or an unsubstituted (hetero)aryl group, a halogen, an unsubstituted alkoxy group, a substituted or an unsubstituted aryloxy group, a substituted or an unsubstituted heteroaryloxy group, an ester, an amine, an amide, a nitro, a thioalkyl group, a substituted or an unsubstituted thioaryl group, a substituted or an unsubstituted thioheteroaryl group, a carbarmate, an ureum, a sulfonamide, a sulfoxide and a sulfone,
with the proviso that all hydrocarbon groups in Formula I are straight chain hydrocarbon groups.

A straight chain hydrocarbon group as used herein means a linear hydrocarbon group, which is not further functionalized with hydrocarbon substituents.

A hydrocarbon group as used herein means a functional group only consisting of carbon atoms in the main chain or ring.

The hydrocarbon group is preferably selected from the group consisting of an alkyl group, an alkenyl group, an alkynyl group and an aralkyl group.

In a preferred embodiment, R₃ and R₅ are independently selected from the group consisting of an unsubstituted alkyl group, an unsubstituted alkaryl group and an unsubstituted (hetero)aryl group.

In a more preferred embodiment, R₃ and R₅ are independently selected from the group consisting of an unsubstituted lower alkyl group containing no more then six carbon atoms and an unsubstituted alkaryl group.

In a particularly preferred embodiment, R₃ and R₅ are independently selected from the group consisting of a methyl group, an ethyl group, a n-propyl group, a n-butyl group, a benzyl group and an aryl group.

In all embodiments described above, R₄ is preferably selected from the group consisting of a hydrogen, a halogen, a straight chain unsubstituted alkyl group and a straight chain unsubstituted alkoxy group.

In all these embodiments, R₄ is more preferably selected from the group consisting of a hydrogen, a chlorine, a bromine, a methyl group, an ethyl group, a methoxy group, an ethoxy group, a n-propoxy group and a n-butoxy group.

The NIR absorbing compound has preferably a chemical structure according to Formula II, 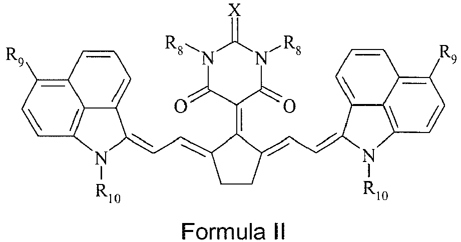 wherein
X is O or S,
R₈ and R₁₀ are independently selected from the group consisting of an unsubstituted alkyl group, an unsubstituted alkenyl group, an unsubstituted alkynyl group, an unsubstituted aralkyl group, an unsubstituted alkaryl group and a substituted or unsubstituted (hetero)aryl group,
R₉ is selected from the group consisting of a hydrogen, an unsubstituted alkyl group, an unsubstituted alkenyl group, an unsubstituted alkynyl group, an unsubstituted aralkyl group, an unsubstituted alkaryl group, a substituted or an unsubstituted (hetero)aryl group, a halogen, an unsubstituted alkoxy group, a substituted or an unsubstituted aryloxy group, a substituted or an unsubstituted heteroaryloxy group, an ester, an amine, an amide, a nitro, a thioalkyl group, a substituted or an unsubstituted thioaryl group, a substituted or an unsubstituted thioheteroaryl group, a carbarmate, an ureum, a sulfonamide, a sulfoxide and a sulfone.

In a particularly preferred embodiment, R₉ is selected from the group consisting of a hydrogen, a chlorine, a bromine, a methyl group, an ethyl group, a methoxy group, an ethoxy group, a n-propoxy group and a n-butoxy group.

Specific examples of NIR absorbing compounds according to the present invention are given in Table 1 without being limited thereto.

**Table 1**

| **STRUCTURES** | IR Absorbers |
|---|---|
| 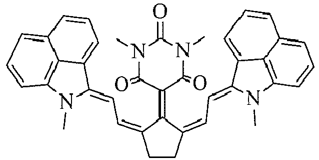 | IR-1 |
| 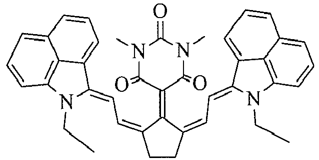 | IR-2 |
| 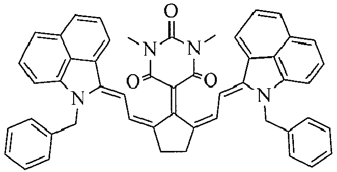 | IR-3 |
| 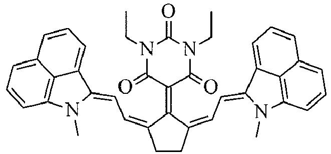 | IR-4 |
| 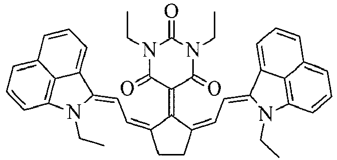 | IR-5 |
| 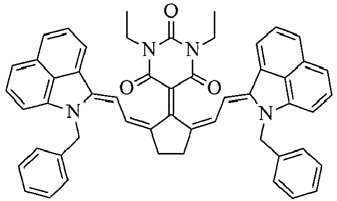 | IR-6 |
| 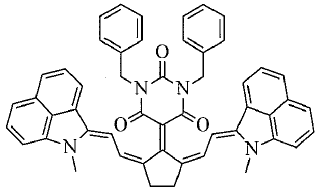 | IR-7 |
| 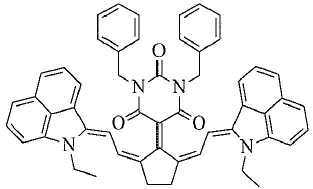 | IR-8 |
| 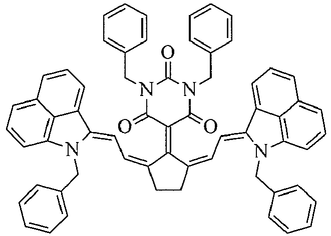 | IR-9 |
| 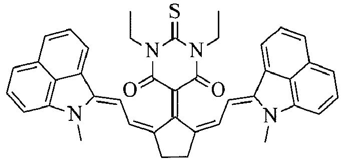 | IR-10 |
| 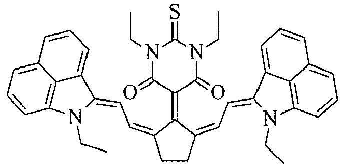 | IR-11 |
| 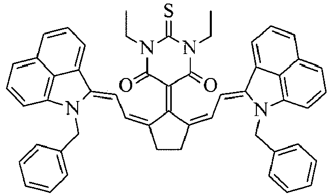 | IR-12 |
| 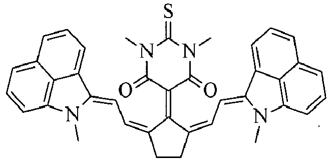 | IR-13 |
| 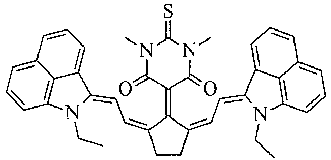 | IR-14 |
| 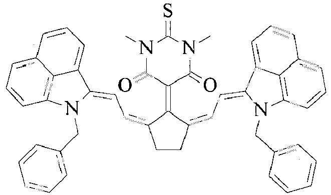 | IR-15 |
| 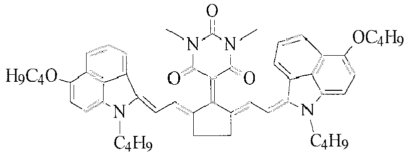 | IR-16 |
| 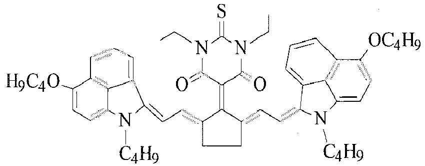 | IR-17 |
| 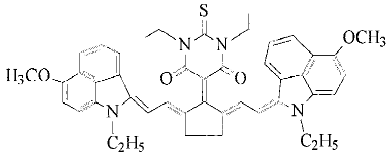 | IR-18 |
| 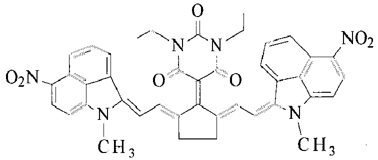 | IR-19 |
| 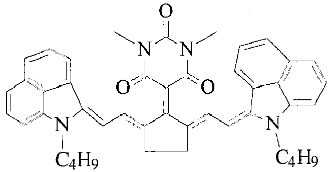 | IR-20 |
| 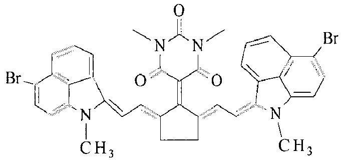 | IR-21 |
| 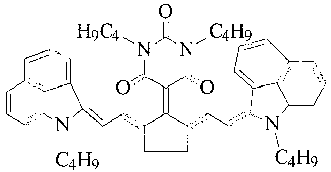 | IR-22 |
| 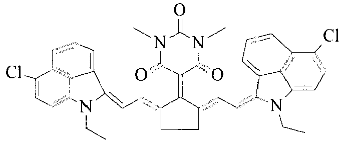 | IR-23 |
| 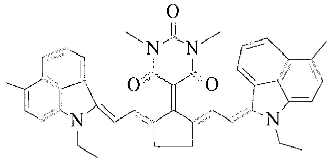 | IR-24 |
| 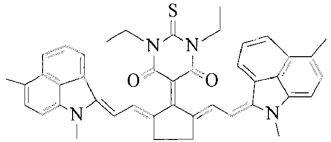 | IR-25 |
| 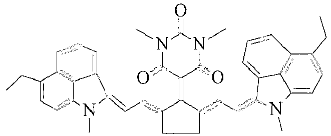 | IR-26 |
| 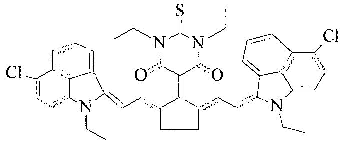 | IR-27 |

Other optothermal converting compounds may be used in combination with the NIR absorbing compound describe above, for example the infrared absorbing pigments or dyes disclosed in WO2016/184881 (Agfa Gevaert), paragraph [042] to [058]).

The amount of optothermal converting agent is preferably at least 10⁻¹⁰ g/m², more preferably between 0.0001 and 0.5 g/m², most preferably between 0.001 and 0.2 g/m².

### Resin based article

A resin based article is defined as an article having a continuous phase of a synthetic, a semi-synthetic or natural polymeric material.

Any resin based article may be used. The resin based article is preferably a (thin) film or foil. The film or foil may be non-transparent or transparent.

The thickness of the foil is preferably less than 500 µm, more preferably less than 250 µm, most preferably less than 100 µm.

Synthetic resins are defined as resins requiring at least one polymerization step in the manufacturing of the resin. Typical examples are poly(olefines) such as high density polyethylene (PE), low density PE, polypropylene (PP), polyesters, poly(amides), poly(urethanes), poly(acetals), poly(ethers), or a combination thereof.

Semi-synthetic resins are defined as resins prepared from natural polymers, such as cellulose, by converting into the final resin by at least one synthetic chemical modification step, such as esterification or alkylation. Typical examples are cellulose acetate butyrate (CAB), cellulose triacetate, nitrocellulose, carboxymethyl cellulose, or phthaloyl gelatin.

Natural resin are defined as resins extracted from natural resources and which are not further modified by synthetic chemical steps. Typical examples are dextranes, pullulan, etc.

Synthetic resins and semi-synthetic resins are particularly preferred, synthetic resins being the most preferred. Poly(esters), poly(amides) and poly(olefins) are particularly preferred, pol(olefins) being the most preferred.

Preferably, the resin based article is a thermoplastic polymeric film or foil.

Examples of thermoplastic polymers include polyolefines such as polyethylene (PE), polypropylene (PP), polyesters such as polyethylene terephthalate (PET), polyethylene 2,5-difurandicarboxylate (PEF) and polyethylene naphthenate (PEN), polylactic acid (PLA), polyacrylonitrile (PAN), polyamides (PA), polyurethanes (PU), polyacetals, such as polyvinylbutyral, polymethyl methacrylate (PMMA), polyimide (PI), polystyrene (PS), polycarbonate (PC), acrylonitrile-butadiene-styrene (ABS), polyvinylchloride (PVC), and copolymers thereof.

Preferred thermoplastic polymers are polyethylene (PE), polypropylene (PP), polyethylene terephthalate (PET) and polyethylene 2,5-furandicarboxylate (PEF).

As PEF may be produced using a biobased furandicarboxylic acid (FDCA), the carbon footpring of its manufacturing process is much smaller compared to for example the production of PET. Moreover, its barrier properties, for example for O₂ and CO₂, may be better.

### Laser cutting - perforation

Laser cutting is typically applied for different kinds of materials where complex contours demand precise, fast and force-free processing.

Lasers may create narrow kerfs and thus may achieve high-precision cuts. Laser cutting typically does not show any distortion and in many cases post-processing is not necessary as the component is subject to only little heat input and can mostly be cut dross-free.

Compared to alternative techniques like die cutting, laser cutting is cost-efficient already for small-batch productions. The big benefit of laser cutting is the localized laser energy input providing small focal diameters, small kerf widths, high feed rate and minimal heat input.

Lasers are especially suited for perforating paper or plastic foils. Usually, web material is processed at winder systems at high speeds of up to 700 m/min.

With a laser, perforating hole diameters ranging from 50 - 400 microns can be achieved. Highly sophisticated laser systems may achieve perforating speeds of up to 420,000 holes per second.

In a preferred embodiment, the optothermal converting agent is applied on the cutting or perforating lines of a resin based article, for example a polymeric film or foil.

Cutting or perforation is then carried out by exposing at least part of the applied optothermal converting agent with a NIR laser.

The laser perforation may be used for packaging films. For example, in food packaging films to prolong the freshness and quality of perishable food. Micro perforation enhances the shelf life of vegetables etc. by exchanging oxygen through micro holes in the range of 60 - 100 µm.

Perforations in polymeric foils wrapped around a packaging may facilitate the removal of the wrapped foil. It may be advantageous to incorporate the perforations in the foil when it is already wrapped around the packaging. In that case it is important that laser perforation does not damage the packaging, for example a cardboard packaging.

Using an optothermal converting agent thereby improving the NIR response of the polymeric foil makes it possible to use low power NIR lasers to perforate the foil and therefore to increase the throughput.

It may also be advantageous to apply the optothermal converting agent on the wrapped polymeric foil, preferably by inkjet. This enables adjustments of the perforating lines at a late stage of the packaging process.

### Laser Welding

Laser beam welding (LBW) is a welding technique used to join multiple pieces of materials through the use of a laser.

Laser beam welding is typically used for joining components that need to be joined with high welding speeds, thin and small weld seams and low thermal distortion. The high welding speeds, an excellent automatic operation and the possibility to control the quality online during the process make the laser welding a common joining method in the modern industrial production.

Laser-welding of plastics consists in the bonding of thermoplastics under heat and pressure. The bonded surfaces must be in the thermoplastic state.

Laser-welding of plastics is possible only with fusible polymers; in general, all amorphous and semicrystalline thermoplastics, as well as thermoplastic elastomers can be used. Elastomers and thermosets, on the other hand, are not suitable for laser-welding. The temperature at which the resin is exposed must be higher than the melting temperature of the material, but lower than the degradation temperature. A local heat generation in the weld is thus desirable in order to avoid degradation (carbonization).

The fusion temperature regions of the plastic parts to be bonded should overlap, and the melts should be mutually compatible.

During the laser welding process of two plastic materials, the separation (bridged gap) between both is typically less than 100 µm. One plastic material is typically a laser-transparent thermoplastic, selected according to the laser wavelength, which heats up very little, if at all, on the passage of the laser beam.

For a weld seam to be produced, the other plastic material must absorb the laser radiation, for example by applying the optothermal converting on a surface. When this plastic material absorbs sufficient energy it begins to fuse and transmits its energy to the other plastic material. In order that the energy can actually be transmitted to the partner, the separation between both is typically less than 100 µm. During the laser welding process, both materials are pressed together; otherwise a secure bond (weld) cannot be guaranteed, despite the application of energy. The pressure required to join the plastic components should be applied as close as possible to the weld; only in this way can the externally applied compaction pressure cause the melts to blend and the plastic parts to weld to each other.

### Composition comprising the optothermal converting agent

The composition comprising the optothermal converting agent may be optimized towards the application method.

In the embodiment wherein the entire surface of the resin based article is applied with the optothermal converting agent, the composition may be considered a coating solution, which may be optimized towards the coating technique used.

In the other embodiment wherein the optothermal converting agent is imagewise applied, the composition may be considered an ink, which may be optimized towards the printing technique used.

The optothermal converting agent is preferably applied to the polymer based article as an ink. The ink is preferably an inkjet ink. The ink may comprise, in addition to the optothermal converting agent, a binder, a surfactant, a solvent, etc.

The ink may be solvent borne, water borne or UV curable. The ink is preferably a UV curable inkjet ink. UV curable inkjet inks may be used on non-absorbing resins. Also, application (printing and curing) of an UV curable ink on a resin may be carried out at high speed.

It has been observed that the absorption characteristics of the optothemal converting agents according to the present invention does not substantially change during UV curing of the applied ink, contrary to those of conventional NIR absorbing compounds, resulting in more stable laser processing results.

A UV curable ink typically comprises at least one photoinitiator and at least one polymerizable compound. The UV curable ink may further comprise polymeric dispersants, a polymerization inhibitor, or a surfactant.

For reliable industrial inkjet printing, the viscosity of the UV curable inkjet inks is preferably no more than 20 mPa.s at 45°C, more preferably between 1 and 18 mPa.s at 45°C, and most preferably between 4 and 14 mPa.s at 45°C.

For good image quality and adhesion, the surface tension of the radiation curable inkjet ink is preferably in the range of 18 to 70 mN/m at 25°C, more preferably in the range of 20 to 40 mN/m at 25°C.

### EXAMPLES

### Materials

All materials used in the following examples were readily available from standard sources such as ALDRICH CHEMICAL Co. (Belgium) and ACROS (Belgium) unless otherwise specified. The water used was deionized water.

**Ajisper PB821,** is a pigment dispersing agent, a polyallylamine polyester graft copolymer, commercially available from Ajinomoto Fine-Techno Co.

**Tegoglide 410** is a wetting agent commercially available from EVONIK.

**PVB** is polyvinyl butyral commercially available as S-LEC BL-10 from SEKISUI.

**MEK** is an abbreviation used for methylethylketone.

### Example 1

### Preparation of IR-01

IR-01 was synthesised using the synthetic methods disclosed in EP-A 2463109 (AGFA GEVAERT), paragraphs [0150] to [0159].

The chemical formula of IR-01 is given below.

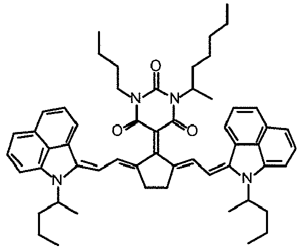

### Preparation of IR-02

The preparation of IR-02 is described below.

### Preparation of INT-01

### Step 1

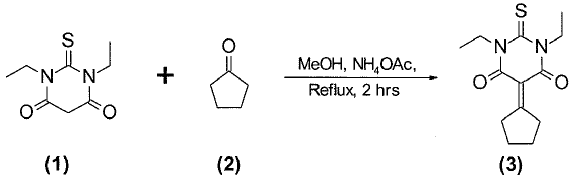

Compound (1) (0.25 mol, 1 equiv., 50.1 g) and compound (2) (0.5 mol, 2 equivs., 42.1 g) were dissolved in MeOH (75 mL). 0.3 g ammonium acetate (NH₄OAc) was then added and the reaction mixture was stirred at reflux for 8 hours. The reaction mixture was allowed to cool down to room temperature.

The precipitate was collected by filtration and washed with MeOH. The product (3) was obtained with a yield of 81 %.

### Step 2

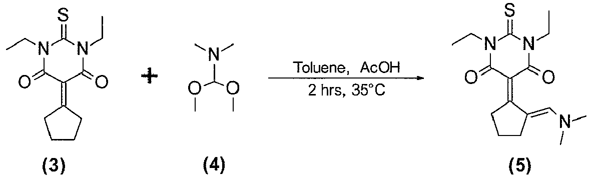

Compound (3) (0.2 mol, 1 equiv., 53.3 g) was dissolved in toluene (375 mL). The acetic acid was added (0.2 mol, 1 equiv., 12 g) and the reaction mixture was stirred for 5 minutes. Compound (4) (0.24 mol, 1.2 equivs., 28.6 g) was then added and the reaction mixture was stirred at 35°C for 2.5 hours. After cooling to room temperature, compound (5) was collected by filtration and washed with MTBE.

The product was obtained with a yield of 69%.

### Step 3

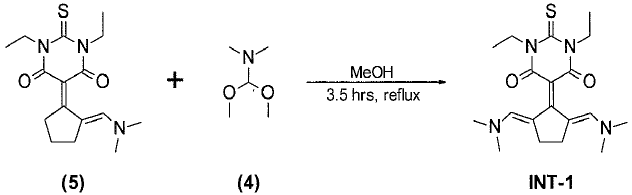

At reflux, compound (5) (0.12 mol, 1 equiv., 38.4 g) was dissolved in MeOH (120 mL). Compound (4) (0.59 mol, 4.9 equivs., 70 g) was added dropwise over 30 minutes. The reaction mixture was stirred overnight at reflux; then cooled down to 0°C and stirred during 15 min.

The product was collected by filtration and first washed with MeOH.

INT-1 was obtained with a yield of 59%.

### Preparation of INT-02

### Step 4

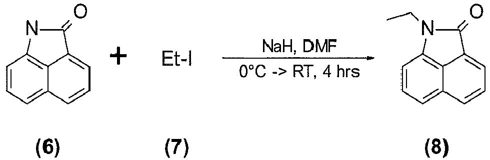

Compound (6) (6.65 g, 39 mmol, 1 equiv.) and NaH (2.81 g, 117 mmol, 3 equivs.) were dissolved in 100 mL dimethylformamide (DMF) and cooled to 0°C. Ethyl iodide (7.33 g, 47 mmol, 1.2 equivs.) was then added dropwise. The reaction mixture was stirred at 0°C for 30 minutes. Then, the reaction mixture was stirred at room temperature for another 4 hours. After completion, ice water (200 mL) was added. The reaction mixture was extracted with ethyl acetate (2 × 150 mL). The organic layer was washed with brine (i.e. a saturated NaCl solution) and dried over MgSO₄. The solid was filtered off and the filtrate was concentrated under reduced pressure.

The product was obtained with a yield of 92%.

### Step 5

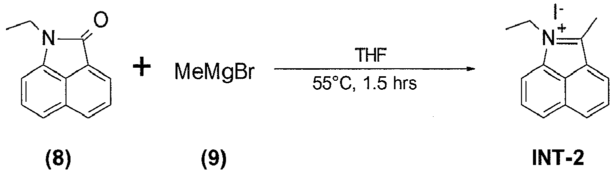

Under inert atmosphere, compound (8) (140 g, 0.7 mol, 1 equiv.) was dissolved in THF (220 mL) and compound (9) (270 mL of a solution of 22% in THF with d = 1.03, 1.1 equivs.) was added dropwise over 30 minutes at a maximum temperature of 55°C. The reaction mixture was stirred for 1 hour at 55°C. After completion, the mixture was cooled down to 35°C and poured into a mixture of H₂O/HCl (1700 mL/300 g, solution at 20°C), with a constant air flow. Nal (120 g, 0.80 mol, 1.15 equivs.) was then added and the reaction mixture was stirred at 30°C for 1 hour. The solid was filtered off and washed with H₂O and Acetone.

The product was obtained with a yield of 89%.

### Preparation of IR-02

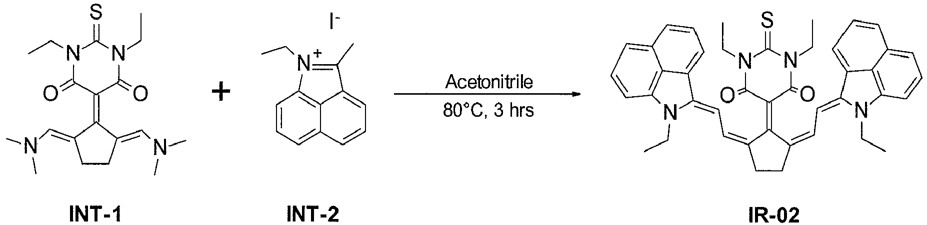

INT-1 (6 g, 15.9 mmol, 1 equiv.) and INT-2 (13.2 g, 38.2 mmol, 2.4 equivs.) were stirred in acetonitrile (720 mL) at 80°C for 4 hours. After completion, the reaction mixture was allowed to cool down to room temperature. The solid was collected by filtration and washed with acetonitrile and MTBE.

IR-2 was obtained with a yield of 99%.

### Preparation of the IR inks INK-01 and INK-02

### Preparation of the IR absorber dispersion IR-DISP-02

The Infrared dispersions IR-DISP-02 was prepared by mixing 15 g of the infrared compound IR-02 with 15 g of Ajisper PB821 and 270 g of ethyl acetate using a DISPERLUX™ dispenser. Stirring was continued for 30 minutes.

The vessel was then connected to a Dynomill Research Lab mill filled with 200 g of 0.4 mm yttrium stabilized zirconia beads ("high wear resistant zirconia grinding media" from TOSOH Co.). The mixture was circulated over the mill for 162 minutes (residence time of 25 minutes) and a rotation speed in the mill of about 11.8 m/s. During the complete milling procedure the content in the mill was cooled to keep the temperature below 60°C.

After milling, the dispersion was discharged into a vessel. The resulting concentrated IR absorber dispersion exhibited an average particle size of 220 nm as measured with a Malvern™ nano-S.

### Preparation of the IR absorber inks INK-01 and INK-02

The IR absorber solution inks INK-01 and INK-02 were prepared by dissolving 15 mg of Tegoglide 410, 3 gr of poly(vinyl butyral) (PVB) and 400 mg of respectively IR-01 and IR-DISP-02 in 100 ml methyl-ethylketone (MEK).

### Preparation of laser processable foils

### Laser processable foils provided with a coating of IR absorber

Different polymeric foils (cellophane, polyethylene terephthalate (PET), polypropylene (PP) and low density polyethylene (LDPE)) were placed on a Elcometer 4340 automatic film applicator. The IR absorber inks INK-01 and INK-02 were applied on the different foils at a coating thickness of respectively 20 µm and 10 µm, both at room temperature. After drying at ambient conditions for 3 hours, the laser processable foils comprising a coating of an IR absorber according to Table 1 were obtained.

### Laser processable foils provided with a pattern of IR absorber

A line of droplets of INK-01 and INK-02 was applied onto a set of different polymeric foils (cellophane, PET, PP and LDPE) by means of a Camag Linomat 5 instrument. 10 cm lines were deposited with 1 cm interdistance at a speed of 40 µl/s thereby forming a line-pattern of INK-01 and INK-02 onto the different foils. After drying at ambient conditions for 3 hours, the laser processable foils comprising a pattern of IR absorber according to Table 01 were obtained.

### Laser perforation experiments

The foils comprising a coating of IR absorber were exposed with a Coherent 8 W YAG laser (1064 nm). The number of laser pulses was varied between 20-40 and the laser power output was varied between 20-100%. The suitable laser conditions for perforation are listed in Table 1.

**Table 1**

| **Foil** | **IR absorber coating** | **Laser power** | **Number of pulses** | **Perforation** |
|---|---|---|---|---|
| Cellophane | - | 20-100% | 20-40 | No |
| PET | - | 20-100% | 20-40 | No |
| PP | - | 20-100% | 20-40 | No |
| LDPE | - | 20-100% | 20-40 | No |
| Cellophane | Ink-01 | 40% | 10 | Yes |
| PET | Ink-01 | 40% | 10 | Yes |
| PP | Ink-01 | 40% | 10 | Yes |
| LDPE | Ink-01 | 40% | 15 | Yes |
| Cellophane | Ink-02 | 20% | 10 | Yes |
| PET | Ink-02 | 20% | 15 | Yes |
| PP | Ink-02 | 20% | 10 | Yes |
| LDPE | Ink-02 | 20% | 15 | Yes |

For the foils comprising a pattern of IR absorber, the laser conditions were varied until a perforation could be detected (see Table 2).

**Table 2**

| **Foil** | **IR absorber coating** | **Laser power** | **Number of pulses** | **Perforation** |
|---|---|---|---|---|
| Cellophane | Ink-01 | 30% | 10 | Yes |
| PET | Ink-01 | 30% | 10 | Yes |
| PP | Ink-01 | 35% | 10 | Yes |
| LDPE | Ink-01 | 20% | 15 | Yes |
| Cellophane | Ink-02 | 10% | 15 | Yes |
| PET | Ink-02 | 15% | 15 | Yes |
| PP | Ink-02 | 15% | 15 | Yes |
| LDPE | Ink-02 | 15% | 15 | Yes |

From this it can be concluded that applying the IR-absorber with a patterned printing technique enables local sensitization of the foil to the laser.

### Laser welding experiments

Two foils comprising a coating of IR absorber as prepared above were hold against each other and subsequently exposed to a Coherent 8 W YAG laser (1064 nm). The number of laser pulses was varied between 20-40 and the laser power output was varied between 20-100% (see Table 3).

**Table 3**

| **Foil-1** | | **Foil 2** | | **Laser power (%)** | **Number of pulses** | **Welding** |
|---|---|---|---|---|---|---|
| | **IR absorber coating** | | **IR absorber coating** | | | |
| BOPET | - | PETG | - | 10-100 | 20-40 | No |
| PP | - | PP | - | 10-100 | 20-40 | No |
| BOPET | Ink-01 | PETG | Ink-01 | 100 | 100 | Yes |
| PP | Ink-01 | PP | Ink-01 | 100 | 15 | Yes |
| BOPET | Ink-02 | PETG | Ink-02 | 100 | 100 | Yes |
| PP | Ink-02 | PP | Ink-02 | 100 | 15 | Yes |

From the results described above it is clear that the application of the NIR absorbing compound, whether as a coating or a pattern, enables laser processing, i.e. laser welding and perforation, of transparent foils.

### Stability of the ink formulations

The OD at λₘₐₓ of a dilution of 100 mg ink in 100 ml dichloromethane was determined at different times over a time interval of 2 months. The inks were stored at room temperature in a dark container. The results are shown in Table 4.

It is clear that the INK-02 outperforms the INK-01 in stability, which degrades with around 50% in 2 months.

**Table 4**

| Time (hours) | OD(λₘₐₓ) Ink-01 | OD(λₘₐₓ) Ink-02 | ΔOD(λmax) Ink-01 | ΔOD(λmax) Ink-02 |
|---|---|---|---|---|
| 0 | 1.29 | 1.58 | 0 | 0 |
| 24 | 1.28 | 1.67 | -0.01 | 0.09 |
| 96 | 1.23 | 1.69 | -0.06 | 0.11 |
| 168 | 1.18 | 1.63 | -0.11 | 0.05 |
| 336 | 1.09 | 1.63 | -0.20 | 0.05 |
| 720 | 1.00 | 1.62 | -0.29 | 0.04 |
| 1440 | 0.73 | 1.56 | -0.56 | -0.02 |

## Claims

1. A method of near infrared (NIR) laser processing a resin based article comprising the steps of:
- applying a composition comprising an optothermal converting agent on a surface of the resin based article, and
- exposing at least part of the applied optothermal converting agent with a NIR laser, **characterized in that** the optothermal converting agent includes a NIR absorbing compound having a chemical structure according to Formula I, 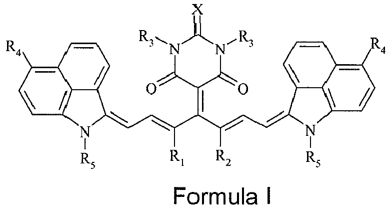 wherein
XisOorS,
R₁ and R₂ represent the necessary atoms to form a substituted or unsubstituted 5 or 6 membered ring,
R₃ and R₅ are independently selected from the group consisting of an unsubstituted alkyl group, an unsubstituted alkenyl group, an unsubstituted alkynyl group, an unsubstituted aralkyl group, an unsubstituted alkaryl group and a substituted or unsubstituted (hetero)aryl group,
R₄ is selected from the group consisting of a hydrogen, an unsubstituted alkyl group, an unsubstituted alkenyl group, an unsubstituted alkynyl group, an unsubstituted aralkyl group, an unsubstituted alkaryl group, a substituted or an unsubstituted (hetero)aryl group, a halogen, an unsubstituted alkoxy group, a substituted or an unsubstituted aryloxy group, a substituted or an unsubstituted heteroaryloxy group, an ester, an amine, an amide, a nitro, a thioalkyl group, a substituted or an unsubstituted thioaryl group, a substituted or an unsubstituted thioheteroaryl group, a carbarmate, an ureum, a sulfonamide, a sulfoxide and a sulfone,
with the proviso that all hydrocarbon groups in Formula I are straight chain hydrocarbon groups.

2. The method of NIR laser processing a resin based article according to claim 1 wherein the composition comprising the optothermal converting agent is imagewise applied on a surface of the article.

3. The method of NIR laser processing a resin based article according to claim 2 wherein the composition comprising the optothermal converting agent is imagewise applied on a surface of the article by a printing method selected from the group consisting of intaglio printing, screen printing, flexographic printing, offset printing, inkjet printing, tampon printing, valve jet printing and gravure offset printing.

4. The method of near infrared (NIR) laser processing a resin based article according to claim 3 wherein the composition comprising the optothermal converting agent is applied by inkjet printing.

5. The method of NIR laser processing a resin based article according to any of the preceding claims wherein the application step is followed by a fixation step.

6. The method of NIR laser processing a resin based article according to claim 5 wherein the fixation step is a UV curing step, a heating step, a drying step, or a combination thereof.

7. The method of NIR laser processing a resin based article according to any of the preceding claims wherein the composition comprising the optothermal converting agent is an inkjet ink.

8. The method of NIR laser processing a resin based article according to claim 7 wherein the inkjet ink is a UV curable inkjet ink.

9. The method of NIR laser processing a resin based article according to any of the preceding claims wherein the resin based article is a foil.

10. The method of NIR laser processing a resin based article according to claim 9 wherein the foil includes a thermoplastic polymer selected from the group consisting of a polyester, a polyamide and a polyolefin.

11. The method of NIR laser processing a resin based article according to claim 9 or 10 wherein the foil is wrapped around a packaging.

12. The method of NIR laser processing a resin based article according to any of the preceding claims wherein laser processing is selected from the group consisting of laser cutting, laser perforating, and laser welding.

13. The method of NIR laser processing a resin based article according to any of the preceding claims wherein the optothermal converting agent has a chemical structure according to Formula II, 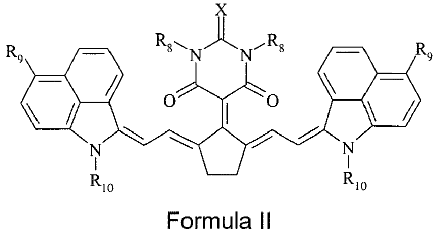 wherein
X is O or S,
R₈ and R₁₀ are independently selected from the group consisting of an unsubstituted alkyl group, an unsubstituted alkenyl group, an unsubstituted alkynyl group, an unsubstituted aralkyl group, an unsubstituted alkaryl group and a substituted or unsubstituted (hetero)aryl group,
R₉ is selected from the group consisting of a hydrogen, an unsubstituted alkyl group, an unsubstituted alkenyl group, an unsubstituted alkynyl group, an unsubstituted aralkyl group, an unsubstituted alkaryl group, a substituted or an unsubstituted (hetero)aryl group, a halogen, an unsubstituted alkoxy group, a substituted or an unsubstituted aryloxy group, a substituted or an unsubstituted heteroaryloxy group, an ester, an amine, an amide, a nitro, a thioalkyl group, a substituted or an unsubstituted thioaryl group, a substituted or an unsubstituted thioheteroaryl group, a carbarmate, an ureum, a sulfonamide, a sulfoxide and a sulfone.

14. The method of NIR laser processing a resin based article according to claim 13 wherein R₉ is selected from the group consisting of a hydrogen, a chlorine, a bromine, a methyl, an ethyl, a methoxy group, an ethoxy group, a n-propoxy group and a n-butoxy group.

15. A packaging comprising a laser processed foil obtained according to a method as defined in any of the claims 9 to 11.
